# EUROPEAN PATENT SPECIFICATION

(11) **EP 4 337 466 B1**
(45) Date of publication and mention of the grant of the patent: **30.07.2025**
(21) Application number: 22727124.4
(22) Date of filing: 04.05.2022
(51) Int. Cl.: B32B 27/08, B32B 27/30, B32B 27/32, C08J 5/18

(54) **MULTILAYER FILM**
MEHRSCHICHTIGE FOLIE
FILM MULTICOUCHES

(30) Priority: 14.05.2021 IN 202121021873; 28.06.2021 EP 21182139
(43) Date of publication of application: 20.03.2024
(73) Proprietor: Unilever IP Holdings B.V., 3013 AL Rotterdam (NL); Unilever Global IP Limited, Wirral, Merseyside CH62 4ZD (GB)
(72) Inventor: DAS, Sandip, 6708 WH Wageningen (NL); KURUGANTI, Thejaswi Sesha, 6708 WH Wageningen (NL); GADGEEL, Arjit Ajay, 6708 WH Wageningen (NL)
(74) Representative: Newbould, Frazer Anthony
(86) International application number: PCT/EP2022/061894
(87) International publication number: WO 2022/238187

(56) References cited:
- WO-A1-2020/229932
- WO-A1-2021/053492
- WO-A1-2021/074697
- WO-A1-2022/227014

## Description

### Field of the Invention

The present invention relates to a film for packaging a product, particularly to an improved multilayer film having recycled polyolefin.

### Background of the Invention

Plastics are used in a wide variety of applications, such as packaging and consumer goods. Plastics are in high demand in these applications due to their relatively low production costs and good balance of material properties.

To meet the increasing demand, millions of tons of plastics are produced globally. Majority of such synthetic plastics are produced from increasingly scarce fossil sources, such as petroleum and natural gas. The production of plastic from fossil sources contributes to raising the levels of greenhouse gases. The ubiquitous use of plastics has consequently resulted in millions of tons of plastic waste being generated every year. Most of the used plastics end in landfills, other as litter and still others end in water bodies.

There is environmental pressure on industry to recycle waste polymers, particularly those used in packaging applications. Plastics recycling has emerged as a solution to mitigate the issues associated with the wide-spread usage of plastics. The single or mixed streams of plastic waste are sorted, washed, and reprocessed into pellets that are suitable for re-use in plastics processing.

Post-consumer resin particularly includes a large amount of high-density polyethylene mainly due to the extensive use of high-density polyethylene in large containers for example in milk container, homecare and personal care bottles. Post-consumer recycled resin from such containers contain contaminants such as paper, other plastic resins which makes it challenging to incorporate the post-consumer recycled high density polyethylene into packaging.

Incorporating recycled polyethylene into the packaging material have been tried in the past.

One such container having recycled HDPE is described in EP0561187 A1 (Owen Illinois Plastic Products Inc., 1993) which discloses a plastic container made from a fusion blend of a post-consumer resin and virgin ethylene polymers. The blend includes a post-consumer resin of homopolymer high density polyethylene plastic and a small amount of linear low-density polyethylene resin preferably along with virgin HDPE to provide improved stress crack resistance and address the loss of physical properties due to the presence of post-consumer resins. WO2021053492 relates to a laminated structure that is prepared by laminating polyethylene webs suitable for the preparation of a stand up pouch.The SUP is made with recycled polyethylene and is recyclable.

Multilayered flexible film structure with different materials for providing different functions are known. Known multilayered flexible film structure provide good properties. Typically, the multilayered film structures include a combination of two polyethylenes layers. However, these multilayered films generally use virgin polymers.

Flexible packaging which includes films or laminates for preparing pouches or bag and sheet for preparing tubes, polyethylene film is very important feedstock material. Depending on packs sizes, polyethylene may contribute up to 95% in flexible packaging. It is therefore highly desired to increase the incorporation of recycled polyethylene in the multilayered flexible films. It is particularly desired to provide a multilayered flexible film have increasing levels of mechanically recycled polyethylene to encourage circular economy.

However, the present inventors have found that the use of recycled polyethylene, more particularly mechanically recycled polyethylene in the flexible films and packaging materials is limited due to quality issues which includes formation of gels, reduced mechanical strength and issues in sealing ability. In addition to these quality issue, incorporation of recycled polyethylene also causes orange peel effect from print side, film breakage and leakages are also seen in the packaging. When blown extruded films are made from recycled post-consumer polymeric material the films have diminished physical properties. To minimize these limitations, the level of incorporation in known multilayer films of recycled polyethylene, particularly mechanically recycled polyethylene has been kept lower than 10 wt.%.

Among the objectives of the present invention, it is desired to provide a flexible multilayer film which incorporates higher levels of recycled high-density polyethylene resin.

It is another object of the present invention to provide a flexible multilayer film which incorporates an increased amount of recycled polyethylene without compromising on the mechanical and functional properties.

It is yet another object of the present invention to provide a process for preparing an extrusion blown flexible multilayer film which ensures that the good film quality is maintained even when higher levels of the recycled polyethylene content is incorporated.

It is also an object of the present invention to provide a laminate having the flexible multilayer film which incorporates an increased amount of recycled polyethylene without compromising of the mechanical and functional properties of the laminate structure.

It is yet another object of the present invention to provide a flexible package which provides for further recycling and is suitable for circular economy.

### Summary of the Invention

The present inventors have found that at least one of the abovementioned objectives is achievable by a multilayer film having a first polyethylene layer, a second polyethylene sealant layer and sandwiched therebetween a core layer having recycled HDPE. The present inventors have further found that limiting the amount of the LLDPE and the LDPE in the core layer further improves the functional and mechanical properties of the multilayer film even when higher levels of recycled HDPE are included in the film.

As used herein, the term "recycled" polyethylene includes post-consumer recycled (PCR) polyethylene. The recycled polyethylene may be a mechanically recycled polyethylene or a chemically recycled polyethylene.

As used herein, the term "post-consumer recycled" (PCR) refers to resin (e.g., a polymer or polymers) that has reached the intended end user or consumer, is no longer being used for its intended purpose, and which has been collected or reclaimed after it is discarded by the end user or consumer. Thus, for example, it is understood that the term refers to material that would have otherwise been disposed of as waste but has instead been collected and recovered (reclaimed) as a material input, in lieu of new virgin material, for a recycling or manufacturing process. The term is inclusive of such collected or reclaimed materials which have been further treated or processed to facilitate re-use of the material. The term recycled includes polyethylene that has been used and thereafter entered an established recycling stream.

As used herein the term recycled high density polyethylene (rHDPE) refers to the post-consumer recycled high density polyethylene resin which comprises homopolymer of high-density polyethylene. Preferably the recycled high-density polyethylene is prepared from rigid bottles including milk bottle, juice bottles, other consumer bottles such as homecare product bottle and personal care product bottles, preferably 95% of the recycled HDPE includes the milk bottle, juice bottles and other consumer bottles. Preferably level of virgin HDPE resin is less than 3 wt.%, preferably no virgin HDPE resin is added.

The term "virgin polyethylene" as used herein denotes a polyethylene that has not been used by a consumer/end user and then recycled. A "virgin polyethylene" is a polymeric material that has not undergone, or otherwise has not been subject to, a heat process or a molding process. The physical, chemical and flow properties PCR resin differs when compared to virgin polymeric resin. The polyethylene includes LDPE, LLDPE and HDPE.

As used herein the term "flexible film" denotes a flexible sheet of polymer which has a thickness dimension which is substantially smaller in relation to its breadth and width and is used primarily for preparing a package for storing consumer goods which are in a solid, semi-solid and/or liquid form. The flexible film may be presented as a wound roll of material. Flexible film are usually used for preparing bags, sachets, pouches and other sealed package for holding consumer product.

As used herein the term "laminate structure" refers to layers of film bonded together, in this case a multilayer film according to the present invention to a second polymer film substrate. The bonding may be achieved by heat treatment, adhesives or other method known in the art to laminate two films or sheet.

According to a first aspect of the present invention disclosed is a flexible multilayer film for preparing a package, said flexible multilayer film comprising:
i) a first polyethylene layer;
ii) a second polyethylene sealant layer;
iii) a core layer sandwiched there between the first polyethylene layer and the second polyethylene sealant layer;
wherein the core layer comprises at least 80 wt.% recycled HDPE by weight of the core layer; wherein the first polyethylene layer comprises 50 wt% to 100 wt% recycled LLDPE, recycled LDPE or mixtures thereof.

According to a second aspect of the present invention disclosed is a process for preparing a flexible multilayer film by a blown process.

According to a third aspect of the present invention disclosed is a laminate comprising a multilayer film of the first aspect or a multilayer film obtainable by a process of the second aspect.

According to the fourth aspect of the present invention disclosed is a package formed from the laminate or the multilayer film according to the present invention. The invention also includes a packaged article enclosing a consumer product.

### Detailed Description of the Invention

According to the first aspect of the present invention disclosed is a flexible multilayer film which includes a first polyethylene layer, a second polyethylene sealant layer and a core layer sandwiched there between the first polyethylene layer and the second polyethylene sealant layer. The core layer includes at least 80 wt.% recycled HDPE.

### Multilayer film

The term "multilayer film" refers to a film comprising at least three layers. Preferably the multilayer film includes a "skin layer" which term refers to an external layer of the multilayer film. Typically, a multilayer film comprises two skin layers which compositionally can be the same or different. "Layer" refers to a single thickness, coating or stratum spread out or covering a surface. The multilayer film according to the present invention is a co-extruded film which is formed by co-extruding the three layers of the multilayer film.

The multilayer film according to the first aspect of the present invention has at least three-layered structure. Preferred embodiments may have more than three layers, for example five layers, seven layers or more.

Preferably the multilayer film has a thickness ranging from 5 micrometers to 250 micrometers. More preferably the thickness of the multilayer film ranges from 30 micrometers to 250 micrometers. The core layer may have a thickness of at least 8 micrometers, still preferably at least 12 micrometers, still more preferably at least 14 micrometers, but preferably not more than 175 micrometers, still preferably not more than 150 micrometers and still further preferably not more than 100 micrometers. In some embodiments the first layer is an outside layer of a package and the second layer is an inside layer i.e. the first and second layers are the "skin" at the top and bottom (in section) of the film.

Preferably the multilayer film is an unstretched film. By the term "unstretched" it is meant that the multilayer film is not dimensionally stretched as is performed in the case of biaxially oriented films. Accordingly, it is preferred that the multilayer film according to this invention is not biaxially stretched or uniaxially stretched. Stretching as used herein is a processing step which stretches the film more than a film is stretched due to normal drawing effects caused by film making. For instance, a film in a cast film line is drawn and thus slightly stretched in a machine direction. A similar effect occurs in a blown film line where the bubble is drawn. However, such drawing effects are not understood as stretching. Stretching is more than the drawing occurring in the cast film line or a blown film line. Accordingly, the inventive multilayer film is non-stretched and thus the multilayer film according to this invention is a cast film or a blown film, the latter being preferred. In case the multilayer film is produced on a blown film line, the cooling of the multilayer film can be affected by water cooling or air cooling, the latter being preferred.

Preferably the multilayer film is blown molded, more preferably by a blown film coextrusion process the melts of the polymer materials for the first polyethylene layer, core layer and the second polyethylene sealant layer and optionally for all further layers are extruded and then passed through an annular die and blown into a tubular film by forming a bubble which is collapsed between nip rollers after solidification. The blown coextrusion can be preferably affected at a temperature in the range 160°C to 240°C, and cooled by water or preferably by blowing gas (generally air) at a temperature of 10 to 50°C to provide a frost line height of 0.5 to 8 times the diameter of the disc. The blow-up ratio should generally be in the range of from 1.5 to 4.0, such as from 2.0 to 4.0, preferably 2.5 to 3.5.

Optionally one or both, surface(s) of the multilayer blown film can be corona-or flame treated by one of the known methods. For the corona treatment, the film is passed between two conductor elements serving as electrodes, with such a high voltage, usually an alternating voltage (about 10000 V and 10000 Hz), being applied between the electrodes that spray or corona discharges can occur. Due to the spray or corona discharge, the air above the film surface is ionized and reacts with the molecules of the film surface, causing formation of polar inclusions in the essentially non-polar polymer matrix. The treatment intensities are in the usual range, preferably from 3g to 4g dynes/cm after production.

The multilayer film may be in the form of a film or sheet. The multilayer film or sheet may be further preferably laminated or coextruded with other web to form further layers. The multilayer film or sheet by themselves or after laminating with further layers may be formed into a pouch, bag, sachet, doy pack, gussets pouch or a tube or any other form of flexible package known to a person skilled in the art.

### First polyethylene layer

Disclosed multilayer film according to the first aspect includes a first polyethylene layer. The first polyethylene layer is preferably composed of LLDPE, LDPE or combinations thereof. Preferably the first polyethylene layer includes virgin LLDPE, virgin LDPE or combinations thereof. It is also preferred that the first polyethylene layer includes chemically recycled LLDPE, chemically recycled LDPE or combinations thereof. It is also preferred that the polyethylene is a combination of virgin and chemically recycled material.

Preferably the amount of the HDPE present in the first polyethylene layer is less than 10 wt.%, still preferably the amount of the HDPE is less than 5 wt.% still preferably less than 3 wt.% by weight of the first polyethylene layer, most preferably the first polyethylene layer is substantially free of HDPE. That is the first polyethylene layer includes 0 wt.% HDPE, still preferably less than 0 wt.% mechanically recycled HDPE.

The HDPE may include virgin HDPE, chemically recycled HDPE and mechanically recycled HDPE. Preferably the first polyethylene layer comprises from 0 wt.% to 3 wt.% recycled HDPE, virgin HDPE or mixtures thereof by weight of the first polyethylene layer, still preferably 0 wt.% recycled HDPE, virgin HDPE or mixtures thereof by weight of the first polyethylene layer. Without wishing to be bound by theory it is believed that in the multilayer film according to the present invention which incorporates high levels of recycled HDPE in the core layer, the presence of recycled HDPE, virgin HDPE or mixtures thereof in the first polyethylene layer at a level above 3 wt.% by weight of first layer, adversely impacts the film strength due to the formation of gels which leads to process defects. Further this adverse effect is particularly pronounced when the first polyethylene layer includes recycled LLDPE or recycled LDPE, more particularly in presence of recycled LLDPE.

Preferably the first polyethylene layer has a combination of LDPE and LLDPE. Preferably the first polyethylene layer includes from 20 parts to 100 parts by weight of the first polyethylene layer of LLDPE, more preferably from 80 parts to 100 parts by weight of the first polyethylene layer of LLDPE and from 0 parts to 50 parts by weight of the first polyethylene layer of LDPE, more preferably from 0 parts to 20 parts by weight of the first polyethylene layer of LDPE. The first polyethylene layer comprises from 50 wt.% to 100 wt.% recycled LLDPE, recycled LDPE or mixtures thereof, by weight of the first polyethylene layer. Still preferably the first layer comprises at least 60 wt.%, still preferably 70 wt.%, further preferably at least 75 wt.%, but typically not more than 99 wt.% more preferably not more than 90 wt.%, still preferably not more than 80wt.% recycled LLDPE, recycled LDPE or mixtures thereof, by weight of the first polyethylene layer.

Preferably, the first polyethylene layer has a thickness which is substantially less than the thickness of the core layer and substantially less than the thickness of the total multilayer film. Preferably the thickness of the first polyethylene layer is substantially less, usually less than 35% of the thickness of the multilayer film.

Preferably the first polyethylene layer comprises from 10 wt.% to 40 wt.% of the total weight of the multilayer film, still preferably from 15 wt.% to 30 wt.% of the total weight of the multilayer film.

### Linear low-density polyethylene (LLDPE):

"Linear low-density polyethylene" (or "LLDPE") is a linear ethylene/α-olefln copolymer containing heterogeneous short-chain branching distribution comprising units derived from ethylene and units derived from at least one C₃ to C₁₀ α-olefln comonomer. LLDPE is characterized by little, if any, long chain branching, in contrast to conventional LDPE. LLDPE has a density from 0.910 g/cc to less than 0.940 g/cc. Nonlimiting examples of LLDPE include TUFLIN^{™} linear low density polyethylene resins (available from The Dow Chemical Company), DOWLEX^{™} polyethylene resins {available from the Dow Chemical Company), FINGERPRINT^{™} polyethylene resins (available from the Dow Chemical Company), and MARLEX^{™} polyethylene (available from Chevron Phillips).

The linear low-density polyethylene (LLDPE) present in the multilayer film according to the present invention has a density in the range of 0.890 to 0.925 g/cm³, more preferably in the range of 0.900 to 0.925 g/cm³, yet more preferably in the range of 0.910 to 0.923 g/cm³, still more preferably has a density in the range of 0.915 to 0.922 g/cm³.

Linear low-density polyethylene (LLDPE) preferably includes at least one comonomer, preferably one or two comonomer(s), the latter being especially preferred. That comonomer(s) is/are preferably (a) C₃ to C₁₀ α-olefin comonomer(s). Therefore, the use of copolymers with just one comonomer or terpolymers, i.e. copolymers of ethylene with two further comonomers, is particularly preferred. Said terpolymer is one specific preferred linear low-density polyethylene (LLDPE). Hence, the linear low-density polyethylene (LLDPE) contains preferably just one or two type(s) of C₃ to C₁₀ α-olefin comonomer(s). Still more preferably, the comonomer(s) is/are selected from the group consisting of 1- butene, 1-hexene, 1-octene and mixtures thereof. In one preferred embodiment the comonomer employed is 1-octene. In another preferred embodiment the linear low-density polyethylene (LLDPE) is a terpolymer consisting of ethylene, 1-butene and 1-hexene.

The amount of α-olefin comonomer(s) present in the linear low-density polyethylene (LLDPE) can range from 1.0 to 10.0 mol.%, such as 1.5 to 5.0 mol.%, like 2.0 to 4.0 mol.%. In case the linear low-density polyethylene (LLDPE) is a terpolymer consisting of ethylene, 1-butene and 1-hexene it is preferred that the 1-butene content is in the 0.1 to 1.0 mol.% and the 1-hexene content in the range of 2.0 to 3.5 mol.%.

Preferably the linear low-density polyethylene (LLDPE) has a melt flow rate MFR₂ (190 °C, 2.16 kg) in the range of 0.15 to 8.0 g/10min, more preferably in the range of 0.15 to 4.0 g/10 min, more preferably in the range from 0.15 to 2 g/10 min, more preferably in the range of 0.3 to 1 g/10 min and still preferably in the range from 0.5 to 1 g/10 min.

The linear low-density polyethylene included in the invention have a density preferably in a range of 0.91 gm/mL to 0.93 gm/mL, preferably in a range of 0.92 to 0.93 gm/mL, and especially 0.925 gm/mL. The linear, low-density polyethylene will have a melt index of preferably less than 2.0 and preferably less than about 1.0 gm/10 minute. The linear low-density polyethylene employed in the present invention have long linear chains with controlled numbers of relatively short chain branches attached to the linear chain along its entire length. These sides chains or "branches" are short and will preferably contain from about 1 to 10 carbon atoms depending upon the alpha-monoolefin employed in the preparation of the polymer. The linear low-density polyethylene differs structurally from low-density polyethylene made by high-pressure free radical initiated polymerizations in having few, if any, long chain branches.

The linear low-density polyethylene is commercially available from multiple commercial suppliers. One of the techniques to prepare such polymers involves copolymerizing ethylene and butene 1 in the vapor phase in a fluidized bed process. By reason of the constraints imposed by carrying out the polymerization in the vapor phase, the ethylene polymers prepared by this process are limited to copolymers of ethylene and butene 1. By operating in solvent systems, copolymers can be prepared from alpha-monoolefin comonomers containing up to 12 carbon atoms. Preferably the linear low-density polyethylene are ethylene copolymers having polymerized therein at least one alpha-monoolefin comonomer to containing 6 to 12 carbon atoms, and which optionally also will have copolymerized therein butene 1.

Preferably the linear low-density polyethylene present in the multilayer film is a virgin LLDPE or chemically recycled LLDPE. Preferably virgin LLDPE. Still other embodiments have mechanically recycled LLDPE.

Preferably the linear low-density polyethylene (LLDPE) present in the multilayer film according to the present invention is a butene comonomer based LLDPE, it preferably includes no anti-block additives. It preferably includes no-slip additives. A preferred commercially available LLDPE is Relene ^{®} F18010 from Reliance Industries Limited, India. These are butene comonomer based LLDPE having optimum levels of antioxidants. The LLDPE is preferably has a density of 0.918g/cm³ (ASTM D5105) and has a melt flow rate (MFR) at 190°C, 2.16 Kg of 0.9 g/10 min (ASTM D1238).

### Low density polyethylene (LDPE):

The first polyethylene layer preferably includes a low-density polyethylene (LDPE).

"Low density polyethylene" (or "LDPE") consists of ethylene homopolymer, or ethylene/α-olefin copolymer comprising at least one C₃ to C₁₀ α-olefin that has a density preferably from 0.915 g/cc to less than 0.940 g/cc and contains long chain branching with broad MWD. LDPE is typically produced by way of high pressure free radical polymerization (tubular reactor or autoclave with free radical initiator). Non-limiting examples of LDPE include MarFlex^{™} (Chevron Phillips), LUPOLEN^{™} (Lyondellgasell), as well as LDPE products from Borealis, Ineos, ExxonMobil, and others.

The low-density polyethylene (LDPE) is known in the art. Preferably the low-density polyethylene (LDPE) has a melt flow rate MFR₂ (at 190°C, 2.16 kg) in the range of 0.05 to 2.0 g/10 min, more preferably in the range of 0.10 to 1.8 g/10min, and more preferably in the range of 0.15 to 1.5 g/10 min. Accordingly, one example of such low density polyethylene (LDPE) is the commercial product FT5230 of Borealis AG.

In addition to the LDPE and/or the LLDPE the first polyethylene layer may optionally include additional ingredients such as but not limited to antioxidants, light stabilizers, acid scavengers, processing aids, anti-blocking aids, nucleating agents and slip agents. Such additives are known in the art, see for instance Hans Zweifel at all "Plastics Additives Handbook", 6th edition, and do not contribute to the invention.

Preferably the low-density polyethylene present in the multilayer film is a virgin LDPE or chemically recycled LDPE. Preferably virgin LLDPE. Some embodiments have mechanically recycled LDPE.

Preferably the low-density polyethylene (LDPE) present in the multilayer film according to the present invention preferably includes no slip additives. It preferably includes no-slip additives. A preferred commercially available LLDPE is Relene ^{®} 1020FA20 from Reliance Industries Limited, India. The LDPE preferably has a density of 0.920g/cm³ (ASTMD792) and has a melt flow rate (MFR) at 190°C, 2.16 Kg of 2.0 g/10 min (ASTM D1238). These values were measured for a 40-micrometer film made from 0.7 mm die gap and 2.5 BUR.

### Second polyethylene sealant layer

According to the first aspect of the present invention the multilayer film includes a second polyethylene sealant layer. The term sealant layer as used herein is understood to mean that said layer can be used for sealing purposes, that is on the surface of this layer or on a part of this layer the sealing can take place. This layer is generally sealed when the multilayer film or a laminate composed of the multilayer film is formed into a package for holding consumer products, for example laundry composition.

The sealant layer forms one of the two exterior surfaces of the multilayer film. Still more preferably the sealant layer is attached, that is joined to the core layer of the multilayer film.

Preferably, the sealant layer has a thickness which is substantially less than the thickness of the core layer and substantially less than the thickness of the total multilayer film. Preferably the thickness of the sealant layer is substantially less, usually less than 35% of the thickness of the multilayer film.

The second polyethylene sealant layer preferably includes LLDPE, LDPE or combinations thereof. Preferably the second polyethylene sealant layer includes virgin LLDPE, virgin LDPE or combinations thereof. It is also preferred that the second polyethylene layer includes chemically recycled LLDPE, chemically recycled LDPE or combinations thereof. It is also preferred that the polyethylene is a combination of virgin and chemically recycled material.

Preferably the amount of the HDPE present in the second polyethylene sealant layer is less than 10 wt.%, still preferably the amount of the HDPE is less than 5 wt.% still preferably less than 3 wt.% by weight of the second polyethylene selant layer, most preferably the second polyethylene sealant layer is substantially free of HDPE. That is the second polyethylene sealant layer includes 0 wt.% HDPE, still preferably less than 0 wt.% mechanically recycled HDPE. The HDPE may include virgin HDPE, chemically recycled HDPE and mechanically recycled HDPE. Preferably the second polyethylene selant layer comprises from 0 wt.% to 3 wt.% recycled HDPE, virgin HDPE or mixtures thereof by weight of the second polyethylene selant layer, still preferably 0 wt.% recycled HDPE, virgin HDPE or mixtures thereof.

Preferably the second polyethylene sealant layer includes LDPE, LLDPE, m-LLDPE and more preferably a combination of LLDPE and LDPE, still preferably a combination of m-LLDPE and LDPE. Preferably the second polyethylene layer includes from 20 parts to 100 parts, still preferably from 50 parts to 100 parts, still more preferably from 80 parts to 100 parts by weight of the second polyethylene layer of LLDPE and/or m-LLDPE and from 0 parts to 80 parts by weight, still preferably 0 parts to 50 parts, still more preferably from 0 parts to 20 parts by weight of the second polyethylene sealant layer of LDPE. More preferably the LLDPE in the second polyethylene sealant layer includes a metallocene catalysed LLDPE (m-LLDPE).

The details of the LDPE and LLDPE as discussed above with regard to the first polyethylene layer is also suitable for the second polyethylene sealant layer.

Preferably the second polyethylene sealant layer includes a combination of m-LLDPE and LDPE.

### Metallocene catalysed polyethylene (m-LLDPE):

"Metallocene catalyzed linear low-density polyethylene" (or "m-LLDPE") are linear ethylene/α-olefin copolymers containing homogeneous short-chain branching distribution comprising units derived from ethylene and units derived from at least one C₃ to C₁₀ α-olefin comonomer, or at least one C₄ to C₈ α-olefin comonomer, or at least one C₆ to C₈ α-olefin comonomer. m-LLDPE has a density from 0.913 g/cc to 0.940 g/cc. Preferably the density is at least 0.918 g/cc, still preferably at least 0.920 g/cc, but preferably not more than 0.938 g/cc, still preferably not more than 0.925 g/cc.

Nonlimiting examples of m-LLDPE include EXCEED^{™} metallocene PE, ENABLE^{®} mPE (available from ExxonMobil Chemical), LUFLEXENTM m-LLPE (available from LyondellBasell), and ELTEXTM PF m-LLDPE (available from Ineos Olfeins & Polymers).

Preferably the metallocene catalyzed linear low-density polyethylene present in the multilayer film is a virgin m-LLDPE or chemically recycled m-LLDPE. Preferably virgin m-LLDPE.

For example, Exceed^{™} 1018MK is a metallocene catalyzed ethylene 1-hexene copolymer from ExxonMobil Chemical having a density of 0.918 g/cc, and a melt flow of 1 g/10 minutes (at 2.16 Kg load and a temperature of 190°C). It has an antiblock level of 5000 ppm and a slip level of 1000 ppm.

For example, ELITE^{™} 5401 G is a metallocene catalyzed LLDPE having a density of 0.918 g/cc (ASTM D792) and a melt index of 1 g/10 minutes (at 2.16 Kg load and a temperature of 190°C, ASTM D1238).

Preferably the second polyethylene selant layer comprises from 10 wt.% to 40 wt.% of the total weight of the multilayer film, still preferably from 15 wt.% to 30 wt.% of the total weight of the multilayer film.

### Core layer

As defined above the multilayer film of this invention comprise a core layer. The core layer is sandwiched there between the first polyethylene layer and the second polyethylene sealant layer. By the term core layer as used herein it is meant that this layer forms the middle part of the multilayer film and contributes especially to the mechanical and/or optical properties.

However, in the present case the specific selection of the core layer additionally improves the sealing behaviour of the sealing layer(s). The term core layer further indicates that this layer is typically the thickest layer in the multilayer film.

Accordingly, it is preferred that the thickness of the core layer is preferably in the range of 5 to 150 micrometers, more preferably in the range of 10 to 125 micrometers, yet more preferably in the range of 10 to 100 micrometers.

Further, although the phrase core layer is singular, it may refer to one or more layers, like to 2 to 5 layers, i.e., 2, 3, 4, or 5 layers, that together form the core layer of the multilayer film. However, each of the layers forming together the core layer are chemically identical, that is have been produced with the same material or same composition. Thus, for this reason the core layer is singular although in some embodiments the core layer may comprise several layers all of them produced with the identical material, i.e., the material defined in more detail below.

### Recycled High density polyethylene (rHDPE):

Disclosed multilayer film includes recycled HDPE in the core layer. The core layer includes at least 80 wt.% of the recycled HDPE by weight of the core layer. More preferably from 80 wt.% to 100 wt.% of the core layer is recycled HDPE. Preferably the amount of the recycled HDPE by weight of the core layer is at least 81 wt.% , still preferably at least 83 wt.%, further preferably at least 84 wt.%, but preferably not more than 99 wt.% still preferably more than 95 wt.%, still preferably not more than 90 wt.%, furthermore preferably not more than 85 wt.% .

The recycled high-density polyethylene (rHDPE) according to the present invention may include from 0 wt.% to 10 wt.% of polypropylene preferably 0 wt.% to 7 wt.%, still preferably 1 wt.% to 5 wt.% where the polypropylene has a specific gravity ranging from 0.88 g/mL to 0.98 g/mL (ASTM D792. ASTM D1505). It is highly preferred that the recycled HDPE according to the present invention has at least 90 wt.% HDPE content having a Melt flow index (MFI) of up to 2 g/mL (when measured at 190°C and 2.16 Kg) and a density ranging from 0.94 gm/cc to 0.97 gm/cc. Example of recycled HDPE includes the commercially available grade KWR102 PCR (ex. KW Plastics).

The recycled HDPE is typically inferior to the virgin HDPE because of the presence of one or more contaminants. The presence of contaminant is one of the factors which reduces the functionality of the recycled HDPE. One or more of the following typical contaminants which may be present in the recycled HDPE used in the core layer of the present invention includes aluminium foil, silica, silicate, rubber, silicone, teflon, fibrous material, cellulose, sealant, PET, oil/wax, inorganic dye or combinations thereof. Typically, the recycled HPDE of the present invention includes a contaminant with an average particle size in the range from 1 micrometres to 100 micrometres.

The recycled HDPE may be chemically recycled or mechanically recycled. Preferably the recycled HDPE is mechanically recycled. As used herein the term "mechanically recycled" polyethylene denotes a processing of used polyethylene waste into a reusable secondary raw material or product without significantly changing the chemical structure of the resin for subsequent manufacturing.

Mechanical recycling is the process where the polymer is ground, re-melted and reprocessed, re-blown, re-filmed and formed into different forms. A mechanically recycled polyethylene is subjected to at least one exposure to a thermal cycle (that is melting, cooling and remelting cycle). Exposure to thermal cycle causes chain scission in polyethylene which cause formation of unsaturation (-C=C-). The unsaturation in the recycled polyethylene chain can be analysed using FT-IR peak analysis method (ASTM E168 and ASTM E1252). The unsaturation in the mechanically recycled polyethylene may be measured using NMR 13C analysis (ASTM D5373-08).

Mechanically recycled post-consumer polyethylene obtained from the re-melting process; results in unsaturation in the recycled polyethylene. The recycled polyethylene unit has an unsaturation on at least one terminal end. It is believed that the conditions during recycling process causes formation of unsaturation at the terminal end of the polyolefin unit due to disproportional termination mechanism as described below.

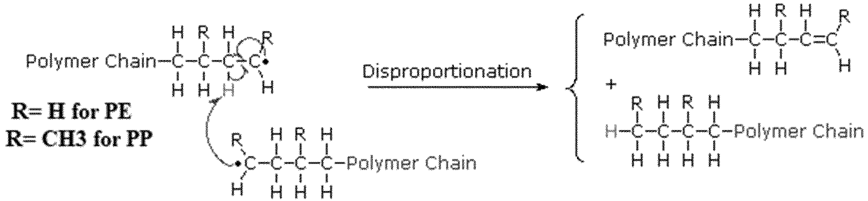

The mechanically recycled polyethylene unit has an unsaturation present on at least at one terminal end of the polyethylene. Preferably at least 60% of the recycled polyethylene unit has an unsaturation present on at least a terminal end. Still preferably at least 70%, still further preferably at least 80%, more preferably at least 85%, still more preferably at least 90%, furthermore preferably at least 95%, stull further preferably at least 97% and most preferably 100% of the recycled polyethylene unit have one unsaturation present on at least a terminal end.

More preferably the recycled polyethylene unit has unsaturation present at both terminal ends of the polyethylene unit. It is further preferred that at least 60% of the recycled polyethylene unit have an unsaturation present on both terminal end. Still preferably at least 70%, still further preferably at least 80%, more preferably at least 85%, still more preferably at least 90%, furthermore preferably at least 95%, still further preferably at least 97% and most preferably 100% of the recycled polyethylene unit has an unsaturation present on both terminal ends.

Preferably less than 10 wt.% of the recycled polyethylene unit has an unsaturation at a position other than the terminal end of the polyethylene backbone, still preferably less than 5 wt.% of the recycled polyolefin has an unsaturation present at a position other than the terminal end in the polyethylene backbone chain, still more preferably less than 3%, further preferably less than 1% and most preferably the recycled polyolefin is free of any unsaturation at a position other than the terminal end of the recycled polyethylene backbone chain.

The mechanically recycled post-consumer polyethylene contains inorganic additives such as pigments and fillers which contribute to higher ash/filler content in the recycled polyethylene. Mechanically recycled polyethylene has an ash content of more than 5 wt.%, more preferably from 5 wt.% to 10 wt.%, still preferably from 5 wt.5 to 8 wt.%. The ash content is measured using the standard ASTM D2584, ASTM D5630, ISO 3451 method.

On the other hand, the chemically recycled post-consumer polyethylene is obtained through repolymerization process thus it does not include an unsaturation in its chain and is also free from fillers and the ash content in chemically recycled post-consumer polyethylene is less than 1 wt.% still preferably the ash content is from 0 wt.% to 1 wt.%, still preferably 0 wt.% to 0.5 wt.%.

A more detailed review of mechanical recycling and other plastics recovery processes are described in S.M. Al- Salem, P. Lettieri, J. Baeyens, "Recycling and recovery routes of plastic solid waste (PSW): A review", Waste Management, Volume 29, Issue 10, October 2009, Pages 2625-2643, ISSN 0956- 053X. While advances in mechanical recycling technology have improved the quality of recycled polymers to some degree, there are fundamental limitations of mechanical decontamination approaches, such as the physical entrapment of contaminants (such as pigments) within a polymer matrix. Thus, even with the improvements in mechanical recycling technology, the dark color and high levels of chemical contamination in currently available recycled plastic waste prevents broader usage of recycled resins by the plastics industry.

"Mechanical recyclability", with reference to a post-consumer used packaging material, herein means the capability of directly recycling a post-consumer used package material; wherein the recycling is carried out mechanically to re-film the recycled material without having to: (1) pre-separate the various film layers of the used package material; (2) pre-clean the residual adhesive present in the used packaging material; and (3) add compatibilizers to the adhesive used to form the used packaging material The recycled HPDE in the core layer has at least 50 parts mechanically recycled, more preferably at least 60 parts, still preferably at least 70 parts, still further preferably at least 80 parts and most preferably all of the recycled HDPE in the core layer is mechanically recycled HDPE.

The recycled HDPE is preferably mechanically recycled post-consumer used FMCG rigid # 2 HDPE packaging preferably used for previously packaging home care products and personal care products. These includes but not limited to fabric care products such as fabric softeners, fabric detergent, hair oil, toilet bowl cleaner, shampoos conditioners.

Preferably the post-consumer used bottles used for preparing the recycled HDPE does not include or has less than 10 % of Non # 2 rigid packaging such as those used for packaging pharmaceuticals, fertilizers.

The recycled HDPE preferably has the properties within the ranges provided in the table below.

| **Property** | **Technical values** | **Measurement method (ASTM)** |
|---|---|---|
| Density | 0.88 to 0.98 g/cc | D 792 |
| Melt Flow Rate (190°C, 2.16 Kg) | 0.3 to 0.7 g/10 min | D1238 |
| Flex Modulus | 700 to 1200 MPa | D790 |
| Tensile strength @ Yield | 20 to 25 MPa | D638 |
| Material colour (L.a.b) L_{ref} 33.47, a_{ref} -5.75, b_{ref} -13.02 | ΔE less than 5 RMS value of L,a,b | |
| Polypropylene content | Less than 10 wt.% | |
| Contaminant present | aluminium foil, silica, silicate, rubber, silicone, teflon, fibrous material, cellulose, sealant, PET, oil/wax, inorganic dye or combinations thereof. | |
| Melt screen size | 150 micron | |

### Virgin High-density polyethylene (HDPE):

The core layer may preferably also include a virgin HDPE. When present the virgin HDPE constitutes from 0 wt.% to 20 wt.% by weight of the core layer. Preferably the amount of the virgin HDPE by weight of the core layer is at least 5 wt.% , still preferably at least 10 wt.%, further preferably at least 15 wt.%, still further preferably at least 20 wt.%, by weight of the core layer.

Virgin high density polyethylene (or "HDPE") is an ethylene homopolymer or an ethylene/α-olefin copolymer with at least one C₄ to C₁₀ α-olefin comonomer, or C₄ to C₈ α-olefin comonomer and a density from 0.0940 g/cc to 0.980 g/cc. Preferably the density is at least 0.0945 g/cc, still preferably at least 0.0950 g/cc, still further preferably at least 0.0953 g/cc, but preferably the density is not more than 0.975 g/cc, still preferably not more than 0.0970 g/cc, still further preferably not more than 0.0965 g/cc, furthermore preferably not more than 0.0960 g/cc and most preferably not more than 0.0955 g/cc.

The HDPE can be a monomodal copolymer or a multimodal copolymer. A "monomodal ethylene copolymer" is an ethylene/C₄ toC₁₀ α-olefin copolymer that has one distinct peak in a gel permeation chromatography (GPC) showing the molecular weight distribution. A "multimodal ethylene copolymer" is an ethylene/ C₄ toC₁₀ α-olefin copolymer that has at least two distinct peaks in a GPC showing the molecular weight distribution. Multimodal includes copolymer having two peaks (bimodal) as well as copolymer having more than two peaks. Nonlimiting examples of HDPE include DOW^{™} High Density Polyethylene (HDPE) Resins (available from The Dow Chemical Company), CONTINUUM^{™} Bimodal Polyethylene Resins (available from The Dow Chemical Company), LUPOLEN^{™} (available from LyondellBasell), as well as HDPE products from Borealis, INEOS, and ExxonMobil.

Preferably the virgin HDPE has a melt index of less than about 0.5 gm/10 min, preferably less than 0.4 grams/10 minutes, and will have polymerized therein at least about 98 mol % ethylene with any comonomer polymerized therein being an alpha-monoolefin containing about 3 to 12 carbon atoms. Such linear high-density ethylene polymers are known and reported in the art and are commercially available from numerous commercial producers. Such linear high-density ethylene polymers are typically prepared by polymerizing ethylene, optionally in the presence of an alpha monoolefin comonomer containing 4 to 12 carbon atoms in the presence of certain metallic catalysts such as chromium catalysts, e.g. CrO₃ supported on silica-alumina supports, and the Ziegler-Natta catalysts, e.g. TiCl₃ employed in conjunction with certain aluminum alkyl cocatalysts. The requisite density and melt index desired in the polymer are obtained by proper control of polymerization conditions including temperature, pressure comonomer concentration, and the concentration of telegenating agents such as hydrogen. Virgin HDPE is commercially available for example, RELENE F46003 is a high-density polyethylene (HDPE) having a density of 0.946 g/cc (ASTM D1505) and a melt index of 0.38 g/10 minutes (at 2.16 Kg load and a temperature of 190°C, ASTM D1238).

### Linear low-density polyethylene (LLDPE):

Preferably the core layer includes less than 20 wt.% LLPDE by weight of the core layer, still preferably less than 10 wt.% LLDPE, further preferably less than 5 wt.% LLDPE and more preferably the levels of LLDPE in the core layer is less than 3 wt.% and most preferably 0 wt.% LLDPE is present in the core layer. These includes both the recycled and virgin LLDPE. Preferably when present the recycled LLDPE is chemically recycled, mechanically recycled or mixtures thereof. It is highly preferred that the core layer is substantially free of LLDPE, that is core layer has no deliberately added LLDPE, that is 0 wt.% of LLDPE in the core layer. Preferably the core layer includes 0 wt.% to 3 wt.% virgin LLDPE, by weight of the core layer, preferably 0 wt.% virgin LLDPE. Preferably the core layer includes 0 wt.% to 3 wt.% recycled LLDPE, by weight of the core layer, preferably 0 wt.% recycled LLDPE.

Preferably the core layer includes less than 20 wt.% LPDE, still preferably less than 10 wt.% LDPE, further preferably less than 5 wt.% LDPE and more preferably the levels of LDPE in the core layer is less than 3 wt.% and most preferably 0 wt.% LDPE is present in the core layer. These includes both the recycled and virgin LDPE. When used the recycled LDPE is preferably chemically recycled LDPE, mechanically recycled LDPE or mixtures thereof. It is highly preferred that the core layer is substantially free of LDPE, that is core layer has no deliberately added LDPE, that is 0 wt.% of LDPE in the core layer. Preferably the core layer includes 0 wt.% to 20 wt.% virgin LDPE, by weight of the core layer, preferably 0 wt.% virgin LDPE. Preferably the core layer includes 0 wt.% to 20 wt.% recycled LDPE, by weight of the core layer, preferably 0 wt.% recycled LDPE.

Preferably the core layer includes 0 wt.% to 20 wt.% polyethylene selected from LLDPE, LDPE or mixtures thereof.

The core layer may advantageously include typical additives (AD) present in multilayer films such as antioxidants, light stabilizers, acid scavengers, processing aids, anti-blocking aids, nucleating agents and slip agents. Such additives are known in the art, see for instance Hans Zweifel at all "Plastics Additives Handbook", 6th edition, and do not contribute to the invention. Preferably the core layer has no additives.

Preferably the core layer comprises from 25 wt.% to 80 wt.% of the total weight of the multilayer film, still preferably from 25 wt.% to 50 wt.% of the total weight of the multilayer film.

### Process for preparing the multilayer film

According to a second aspect of the present invention provided is a process for preparing the multilayer film of the first aspect wherein the film is made by a blown process, preferably an extrusion blown process.

The multilayer film is preferably formed by a co-extrusion process (the extrusion of multiple layers of material simultaneously), for example a blown film co-extrusion process (involving the extrusion a tube of molten polymer through an annular die and inflating to a size greater than its initial diameter to form a thin film bubble). Sheets may be formed, for example, using a sheet die.

The process preferably includes the step of maintaining the temperature of the extruder and the die for the core layer in a range from 180°C to 230°C. Preferably the die for extrusion is a circular die.

Still preferably the process according to the present invention involves the step of passing the molten extruded batch of the core layer through a filter screen to remove suspended particles. Preferably the screen removes suspended particles in the weight average particle size ranging from 1 to 180 micrometers in the melt.

The multilayer film is preferably a blown film and is prepared by an extrusion blown process which is well known to a person skilled in the art. Preferably the multilayer film may be obtainable by a blown film coextrusion process. The term "extruding," or "extrusion" is a process in which a polymer or a mixture of polymers is introduced into an extruder and the polymer or mixture of polymers is propelled continuously along a screw through regions of high temperature and pressure where the polymer is melted and compacted, and finally forced through a die. The extruder may be a single screw extruder, a multiple screw extruder, a disk extruder or a ram extruder.

The process of preparing the multilayer film includes the step of adding the required amount of the polymer for each of the first layer, second layer and the core layer into the hopper of the extruder. Next extruding the polymers along the length of the extruder where the screws propel the polymer forward and simultaneously the polymers are melted, next the melted batch is extruded through a die which is preferably an annular or circular die. Preferably during the extrusion, the temperature of the extruder and the die through which the core layer passes in maintained in the range from 180°C to 230°C. Preferably the molten batch forming the core layer of the multilayer film is further passed through a filter screen for removing suspended particle wherein the suspended particle having a weight average particle size ranging from 1 to 180 micrometers in the melted batch is removed. Thereafter the extruded mass is blown to create a bubble of required thickness and thereafter a cooling process forms the multilayer film having a first polyethylene layer, a second polyethylene sealant layer with a core layer having a recycled HDPE.

### Laminate

Disclosed according to a third aspect of the present invention is a laminate structure having a multilayer film.

In one embodiment of the present invention provided is a laminated structure where a lamination layer is selected from a polyethylene layer and polypropylene layer. The lamination layer is laminated to the multilayer film according to the present invention. The lamination layer is in contact with the first polyethylene layer of the multilayer film. Preferably the lamination layer is polyethylene layer or a polypropylene layer. In some embodiment the lamination layer includes a biaxially oriented polypropylene (BOPP). Preferably the lamination layer is the print layer.

The lamination process involves the step of laminating the lamination layer to the multilayer film. Any of the known commercially available techniques for the lamination step may be employed, these includes the use of a liquid glue (which may be solvent based, solvent less, or water based); a hot melt glue, and thermal bonding. The laminate layer and the multilayer film may also be formed into a laminate by a process of co-extrusion lamination.

Preferably the laminated structure is printed at the interface between the lamination layer and the first polyethylene layer of the multilayer film. It is also suitable in some embodiments that the laminated structure is surface printed. Suitable processes include the well-known flexographic printing and roto gravure printing techniques, which typically use nitro cellulose or water-based inks. Depending on the inks used and/or coat weights applied, subsequent layers of ink may be applied to 'build up' sufficient opacity whether flexographic or gravure printed.

The laminate according to the present invention preferably has a thickness ranging from 30 micrometers to 400 micrometers. More preferably from 40 micrometers to 300 micrometers.

### Package

According to another aspect of the present invention disclosed is a package prepared from the multilayer film or the laminate according to the invention.

The package may be formed in the form of a pouch, bag, sachet, gusseted pouch, stand-up pouch, tubes and other known flexible package in the art. The pouches are preferably form fill sealed pouches, still preferably a vertically formed fill seal machine. The pouches preferably have a capacity to hold 1 gram to 1 Kg of a composition.

Preferably the tube comprises the laminate structure with the laminate layer facing the exterior and the multilayer film facing the interior and in proximity with the product enclosed within the tube.

### Packaged article

The package according to the present invention may be used to enclose a consumer product. The consumer product may be any of those known in the art such as but not limited to a home care composition or a personal care composition. Non-limiting examples of home care composition include laundry cleaning composition, laundry care composition, laundry treatment composition, hard surface cleaning composition, (e.g. of hard surfaces includes dishes and bathroom surfaces, house floor). Non-limiting examples of personal care composition includes hair care composition, oral care composition, skin care compositions. The consumer product may be in any of the form known in the art but not limited to solids, particulate form, tablet, bars, gels, creams, emulsions, paste or unit dose composition. The unit dose composition may preferably have a water-soluble pouch enclosing a composition which may be a solid, gel or a liquid.

Preferably the package according to the present invention is recyclable post-consumer use. Preferably all of the layers of the package are polyethylene or polyethylene based organic mixture, enabling it to be easily recycled through standard polyethylene recycling channels.

### Examples

### Example 1: Preparing multilayer film having different amounts of recycled HDPE in the core layer.

Two different multilayer film having a thickness of 30 micrometres were prepared. The multilayer films has the following structure:

### Example 1A structure:

i) a first polyethylene layer had virgin LLDPE and virgin LDPE. The first layer constituted 30 wt.% of the multilayer film. The first polyethylene layer comprised of 80 wt.% LLDPE (Relene^{®} F18010, ex Reliance Industries Limited, India) and 20 wt.% LDPE (Relene^{®}, 1020FA20 ex Reliance Industries Limited, India) by weight of the first layer.
ii) The second polyethylene sealant layer constituted 30 wt.% of the multilayer film. The polyethylene sealant layer comprised of 80 wt.% metallocene catalysed LLDPE (Exceed 1018 from ExxonMobil or Elite 5401G from Dow) and 20 wt.% LDPE (Relene^{®}, 1020FA20 ex Reliance Industries Limited, India) by weight of the total second polyethylene layer. The m-LLDPE has a density of 0.918 g/cc, MFR 0.9 g/10 min and the LDPE has a density 0.92 g/cc and MFR 2 g/10 min.
iii) The core layer constituted 40 wt.% of the multilayer film according to the present invention. The polyethylene core layer comprised of 80 wt.% of recycled HDPE (rHDPE, Bayanan Nation Grade BP2120) and 20 wt.% of LDPE (Relene^{®}, 1020FA20 ex Reliance Industries Limited, India).

### Example 1B structure:

i) a first polyethylene layer had LLDPE and LDPE. The first layer constituted 25 wt.% of the multilayer film. The first polyethylene layer comprised of 80 parts by weight of LLDPE (Relene^{®} F18010, ex Reliance Industries Limited, India) and 20 parts by weight of LDPE (Relene^{®}, 1020FA20 ex Reliance Industries Limited, India).
ii) The second polyethylene sealant layer constituted 25 wt.% of the multilayer film. The polyethylene sealant layer comprised of 80 wt.% metallocene catalysed LLDPE (Exceed 1018 from ExxonMobil or Elite 5401G from Dow) and 20 wt.% of LDPE (Relene^{®}, 1020FA20 ex Reliance Industries Limited, India) by weight of the second layer. The m-LLDPE has a density 0.918 g/cc, MFR 0.9 g/10 min and the LDPE has a density 0.92 g/cc and MFR 2 g/10 min.
iii) The core layer constituted 50 wt.% of the multilayer film. The polyethylene core layer comprised of 40 parts by weight of recycled HDPE(rHDPE, Banyan Nation Grade BP2120), 50 parts by weight of virgin LLDPE(Relene^{®} F18010, ex Reliance Industries Limited, India) and 10 parts by weight of LDPE (Relene^{®}, 1020FA20 ex Reliance Industries Limited, India).

**Table 1a**

| | **Ex 1A (wt%)** | **Ex 1B (wt.%)** | **Acceptable ranges** |
|---|---|---|---|
| **First PE layer** | **30** | **25** | |
| Virgin LLDPE (by weight of first layer) | 80 | 80 | |
| Virgin LDPE (by weight of first layer) | 20 | 20 | |
| **Core layer** | **40** | **50** | |
| Recycled HDPE (by weight of core layer) | 80 | 40 | |
| Virgin LLDPE (by weight of core layer) | 0 | 50 | |
| Virgin LDPE(by weight of core layer) | 20 | 10 | |
| **Second PE selant layer** | **30** | **25** | |
| Metallocene catalysed LLDPE(by weight of second layer) | 80 | 80 | |
| Virgin LDPE (by weight of second layer) | 20 | 20 | |
| Multilayer film properties | | | |

| Tensile strength (N/15mm) | | | |
|---|---|---|---|
| MD | 14.40 | 7.5 | 12 to 15 |
| CD | 11.39 | 5.2 | 9 to 12 |

| Elongation (%) | | | |
|---|---|---|---|
| MD | 587.35 | 113.6 | 540 to 740 |
| CD | 742.07 | 26.2 | 740 to 940 |

| Young's Modulus (N/mm²)_ | | | |
|---|---|---|---|
| MD | 538.529 | 149 | 300 to 720 |
| CD | 479.22 | 160 | 490 to 790 |

The multilayer film of Ex 1A showed good bubble stability during the blown film forming process, however the Ex 1B showed instability in bubble with various processing defects, such as wrinkles and gels during the blown film forming process. Ex 1A showed superior mechanical and functional properties than that of Ex 1B. Higher values of the Young's modulus suggests that the multilayer film will have more resistance to elongation in use, the Young's modulus of the multilayer film according to the present invention was within acceptable ranges and during the pouch forming was stable and didn't elongate, however the comparative multilayer film Ex-1B was more susceptible to undergoes elongation in use.

### Example 1C structure:

A multilayer film having a thickness of 30 micrometres was prepared. The multilayer film has a first polyethylene layer having LLDPE and LDPE. The first layer constituted 30 wt.% of the multilayer film. The first polyethylene layer comprised of 80 parts by weight of LLDPE (Relene^{®} F18010, ex Reliance Industries Limited, India) and 20 parts by weight of LDPE (Relene^{®}, 1020FA20 ex Reliance Industries Limited, India).

The second polyethylene sealant layer constituted 30 wt.% of the multilayer film. The polyethylene sealant layer comprised of 80 parts of metallocene catalysed LLDPE (Exceed 1018 from ExxonMobil or Elite 5401G from Dow) and 20 parts of LDPE (Relene^{®}, 1020FA20 ex Reliance Industries Limited, India). The m-LLDPE has a density 0.918 g/cc, MFR 0.9 g/10 min and the LDPE has a density 0.92 g/cc and MFR 2 g/10 min.

The core layer constituted 40 wt.% of the multilayer film. The polyethylene core layer comprised of 40 parts of virgin HDPE (Relene^{®}, F46003 ex Reliance Industries Limited, India), 40 parts of recycled HDPE (rHDPE, Bayanan Nation Grade BP2120) and 20 parts of LDPE (Relene^{®}, 1020FA20 ex Reliance Industries Limited, India). The virgin HDPE has a density of 0.946 g/cc and a MFR of 0.38 g/10 min.

**Table 1b**

| | **Comp Ex 1C*** |
|---|---|
| Tensile strength (N/15mm) | |
| MD | 12.6 |
| CD | 9.5 |

| Elongation (%) | |
|---|---|
| MD | 605.5 |
| CD | 871.6 |

| | |
|---|---|
| *the multilayer film is outside the claimed scope. | |

The multilayer film of Ex 1C with lower levels of recycled HDPE in the core layer was found to be comparable with the Ex 1A in accordance with the present invention having higher levels of the recycled HDPE in the core layer. It was observed that even after addition of a higher wt.% of recycled HDPE, the mechanical properties of Ex 1A was comparable to Ex 1C.

**Example 2:** Preparing a multilayer film according to a preferred aspect of the present invention having recycled polyethylene in both the core layer and the first polyethylene layer.

According to a preferred aspect of the present invention a multilayer film having a thickness of 30 micrometres was prepared. The multilayer film (Ex 2) has the following structure:
i) First polyethylene layer constituted 25 wt.% of multilayer film and was compose of recycled LLDPE and recycled LDPE. The first polyethylene layer includes 90 wt.% recycled LLDPE (Recycle- INrLL9110, ex INEOS) and 10 wt.% recycled LDPE (Recycle- INrLD23E760, INEOS) by weight of the first polyethylene layer.
ii) The second polyethylene sealant layer constituted 25 wt. % of the multilayer film. The polyethylene sealant layer comprised of 90 wt.% of metallocene catalysed LLDPE(Exceed 1018 from ExxonMobil or Elite 5401G from Dow) and 10 wt.% LDPE(Relen , 1020FA20 ex Reliance Industries Limited, India) by weight of the second polyethylene selant layer. The m-LLDPE has a density 0.918g/cc, MFR 0.9g/10min and the LDPE has a density 0.92 g/cc and MFR 2g/10min.
iii) The core layer constituted 50 wt.% of the multilayer film. The core layer was comprised of 90 wt.% recycled HDPE (ex. Banyan Nation Grade BP2120) and 10 wt.% rLDPE (Recycle- INrLD23E760, INEOS).

A comparative multilayer film having a thickness of 30 micrometers was prepared (Comp Ex D) which had the following film structure:
i) first polyethylene layer constituted 25 wt.% of multilayer film (Comp Ex C). The first polyethylene layer included 90 wt.% virgin LLDPE (Relene F18010, ex Reliance Industries Limited, India) and 10 wt.% virgin LDPE (Relen , 1020FA20 ex Reliance Industries Limited, India) by weight of the first polyethylene layer.
ii) A second polyethylene sealant layer which constituted 25 wt. % of the comparative multilayer film. The polyethylene sealant layer comprised of 90 wt.% metallocene catalysed LLDPE(Exceed 1018 from ExxonMobil or Elite 5401G from Dow) and 10 wt.% virgin LDPE(Relen , 1020FA20 ex Reliance Industries Limited, India). The m-LLDPE has a density 0.918g/cc, MFR 0.9g/10min and the LDPE has a density 0.92 g/cc and MFR 2g/10min.
iii) The core layer constituted 50 wt.% of the comparative multilayer film. The core layer comprised of 90 wt.% virgin HDPE and 10 wt.% virgin LDPE(Relen, 1020FA20 ex Reliance Industries Limited, India).

**Table 2**

| **Multilayer film with a thickness of 30 micrometers** | **Ex 2 (wt.%)** | **Comp Ex** D **(wt%)** |
|---|---|---|
| **First PE layer** | **25** | **25** |
| recycled LLDPE (by weight of first layer) | 90 | 0 |
| recycled LDPE (by weight of first layer) | 10 | 0 |
| Virgin LLDPE (by weight of first layer) | 0 | 90 |
| Virgin LDPE (by weight of first layer) | 0 | 10 |
| **Core layer** | **50** | **50** |
| Recycled HDPE (by weight of core layer) | 90 | 0 |
| Recycled LDPE (by weight of core layer) | 10 | 0 |
| Virgin HDPE (by weight of core layer) | 0 | 90 |
| Virgin LDPE(by weight of core layer) | 0 | 10 |
| **Second PE selant layer** | **25** | **25** |
| Metallocene catalysed LLDPE(by weight of second layer) | 90 | 90 |
| Virgin LDPE (by weight of second layer) | 10 | 10 |
| Multilayer film properties | | |

| Tensile strength (N/15mm) | | |
|---|---|---|
| MD | 9 | 6.8 |
| CD | 8.2 | 7.7 |

| Elongation (%) | | |
|---|---|---|
| MD | 715.1 | 608.1 |
| CD | 539.2 | 310.6 |

| Young's Modulus | | |
|---|---|---|
| MD | 272.2 | 231.7 |
| CD | 296.4 | 300.1 |

The multilayer film according to the present invention (Ex 2) having recycled polyethylene in both first PE layer and the core layer showed good bubble stability and the mechanical and functional properties were good and comparable to a multilayer film made using virgin polyethylene (Ex Comp D).

## Claims

1. A flexible multilayer film for preparing a package, said flexible multilayer film comprising:
i) a first polyethylene layer;
ii) a second polyethylene sealant layer;
iii) a core layer sandwiched there between the first polyethylene layer and the second polyethylene sealant layer;
wherein the core layer comprises at least 80 wt.% recycled HDPE by weight of the core layer;
wherein the first polyethylene layer comprises 50 wt.% to 100 wt.% recycled LLDPE, recycled LDPE or mixtures thereof.

2. A film according to any one of the preceding claims wherein the core layer comprises one or more further polyethylene selected from the group consisting of:
i 0 wt.% to 20 wt.% virgin LDPE by weight of the core layer;
ii 0 wt.% to 3 wt.% virgin LLDPE by weight of the core layer, preferably 0 wt.% virgin LLDPE;
iii 0 wt.% to 20 wt.% recycled LDPE by weight of the core layer;
iv 0 wt.% to 3 wt.% recycled LLDPE by weight of the core layer, preferably 0 wt.% recycled LLDPE.

3. A film according to any one of the preceding claims wherein the recycled HDPE is a mechanically recycled HDPE.

4. A film according to claim any one of the preceding claims wherein the core layer further comprises virgin HDPE.

5. A film according to any one of the preceding claims wherein the amount of virgin HDPE, recycled HDPE or mixtures thereof present in the first polyethylene layer is from 0 wt.% to 10 wt.% by weight of the first polyethylene layer, preferably 0 wt.% HDPE selected from virgin HDPE, recycled HDPE or mixtures thereof.

6. A film according to any one of the preceding claims wherein the second polyethylene sealant layer comprises LLDPE, LDPE, metallocene catalysed LLDPE or combinations thereof.

7. A film according to claim 6 wherein the second polyethylene sealant layer comprise from 50 parts to 100 parts metallocene LLDPE and/or LLDPE and 20 parts to 50 parts LDPE by weight of the second polyethylene selant layer.

8. A film according to any one of the preceding claims wherein the amount of virgin HDPE, recycled HDPE or mixtures thereof present in the second polyethylene sealant layer is from 0 wt.% to 10 wt.%, preferably 0 wt.% HDPE selected from virgin HDPE, recycled HDPE or mixtures thereof.

9. A process for preparing the flexible multilayer film according to any one of the preceding claims wherein the film is made by a blown process.

10. A process according to claim 9 wherein the blown process comprises the step of maintaining the temperature of the extruder and the die for the core layer in the range from 180°C to 230°C.

11. A laminate structure comprising the flexible multilayer film according to any one of the preceding claims, and a laminate layer selected from polyethylene film, polypropylene film or mixtures thereof.

12. A package formed from a laminate structure according to claim 11 or a multilayer film according to any one of the preceding claims 1 to 8 or a multilayer film obtainable according to claim 9 to 10.

13. A package according to claim 12 wherein the package is in the form of a pouch, sachet, bag, gusseted pouch, stand up pouch and tube.

14. A packaged article wherein a consumer composition selected from home care composition, personal care composition is enclosed within a package according to claim 12 or 13.

## Patentansprüche

1. Flexible mehrschichtige Folie zur Herstellung einer Verpackung, wobei die flexible mehrschichtige Folie umfasst:
i) eine erste Polyethylenschicht;
ii) eine zweite Polyethylen-Versiegelungsschicht;
iii) eine Mittelschicht, die zwischen der ersten Polyethylenschicht und der zweiten Polyethylen-Versiegelungsschicht angeordnet ist;
wobei die Mittelschicht mindestens 80 Gew.-% recyceltes HDPE, bezogen auf das Gewicht der Mittelschicht, umfasst;
wobei die erste Polyethylenschicht 50 bis 100 Gew.-% recyceltes LLDPE, recyceltes LDPE oder Mischungen davon umfasst.

2. Folie nach irgendeinem der vorhergehenden Ansprüche, wobei die Mittelschicht ein oder mehrere weitere Polyethylene umfasst, die aus der Gruppe ausgewählt sind; bestehend aus
i 0 bis 20 Gew.-% Virgin-LDPE, bezogen auf das Gewicht der Mittelschicht;
ii 0 bis 3 Gew.-% Virgin-LLDPE, bezogen auf das Gewicht der Mittelschicht, vorzugsweise 0 Gew.-% Virgin-LLDPE;
iii 0 bis 20 Gew.-% recyceltem LDPE, bezogen auf das Gewicht der Mittelschicht;
iv 0 bis 3 Gew.-% recyceltem LLDPE, bezogen auf das Gewicht der Mittelschicht; vorzugsweise 0 Gew.-% recyceltem LLDPE.

3. Folie nach irgendeinem der vorhergehenden Ansprüche, wobei das recycelte HDPE ein mechanisch recyceltes HDPE ist.

4. Folie nach irgendeinem der vorhergehenden Ansprüche, wobei die Mittelschicht außerdem Virgin-HDPE umfasst.

5. Folie nach irgendeinem der vorhergehenden Ansprüche, wobei die Menge des Virgin-HDPE, des recycelten HDPE oder Mischungen davon, die in der ersten Polyethylenschicht vorliegt, 0 bis 10 Gew.-%, bezogen auf das Gewicht der ersten Polyethylenschicht, beträgt, vorzugsweise 0 Gew.-% HDPE, ausgewählt unter Virgin-HDPE, recyceltem HDPE oder Mischungen davon.

6. Folie nach irgendeinem der vorhergehenden Ansprüche, wobei die zweite Polyethylen-Versiegelungsschicht LLDPE, LDPE, Metallocen-katalysiertes LLDPE oder Kombinationen davon umfasst.

7. Folie nach Anspruch 6, wobei die zweite Polyethylen-Versiegelungsschicht 50 bis 100 Teile Metallocen-LLDPE und/oder LLDPE und 20 bis 50 Teile LDPE, bezogen auf das Gewicht der zweiten Polyethylen-Versiegelungsschicht, umfasst.

8. Folie nach irgendeinem der vorhergehenden Ansprüche, wobei die Menge des Virgin-HDPE, recyceltem HDPE oder Mischungen davon, die in der zweiten Polyethylen-Versiegelungsschicht vorliegt, 0 bis 10 Gew.-%, vorzugswiese 0 Gew.-% HDPE, ausgewählt aus Virgin-HDPE, recyceltem HDPE oder Mischungen davon, beträgt.

9. Verfahren zur Herstellung der flexiblen mehrschichtigen Folie nach irgendeinem der vorhergehenden Ansprüche, wobei die Folie durch ein Blasverfahren hergestellt wird.

10. Verfahren nach Anspruch 9, wobei das Blasverfahren den Schritt der Aufrechterhaltung der Temperatur des Extruders und der Austrittsdüse für die Mittelschicht in dem Bereich von 180°C bis 230°C umfasst.

11. Laminatstruktur, umfassend die flexible mehrschichtige Folie nach irgendeinem der vorhergehenden Ansprüche und eine Laminatschicht, ausgewählt aus einer Polyethylenfolie, Polypropylenfolie oder Mischungen davon.

12. Verpackung, die aus einer Laminatstruktur nach Anspruch 11 oder einer mehrschichtigen Folie nach irgendeinem der vorhergehenden Ansprüche 1 bis 8 oder einer mehrschichtigen Folie, erhältlich nach Anspruch 9 oder 10, gebildet wird.

13. Verpackung nach Anspruch 12, wobei die Verpackung in Form eines Beutels, einer Tüte, einer Tasche, eines Seitenfaltenbeutels, eines Standbeutels und einer Tube vorliegt.

14. Verpackter Artikel, wobei eine Verbraucherzusammensetzung, ausgewählt unter einer Haushaltspflegezusammensetzung, einer Körperpflegezusammensetzung in einer Verpackung gemäß Anspruch 12 oder 13 eingeschlossen ist.

## Revendications

1. Film multicouche flexible pour préparer un emballage, ledit film multicouche flexible comprenant :
i) une première couche de polyéthylène ;
ii) une deuxième couche d'étanchéité en polyéthylène ;
iii) une couche de cœur prise en sandwich entre la première couche de polyéthylène et la deuxième couche d'étanchéité en polyéthylène ;
dans lequel la couche de cœur comprend au moins 80 % en poids de HDPE recyclé par rapport au poids de la couche de cœur ;
dans lequel la première couche de polyéthylène comprend 50 % en poids à 100 % en poids de LLDPE recyclé, de LDPE recyclé ou de mélanges de ceux-ci.

2. Film selon la revendication précédente, dans lequel la couche de cœur comprend un ou plusieurs autres polyéthylènes choisis dans le groupe constitué par :
i. 0 % en poids à 20 % en poids de LDPE vierge, par rapport au poids de la couche de cœur ;
ii. 0 % en poids à 3 % en poids de LLDPE vierge, de préférence 0 % en poids de LLDPE vierge, par rapport au poids de la couche de cœur ;
iii. 0 % en poids à 20 % en poids de LDPE recyclé, par rapport au poids de la couche de cœur ;
iv. 0 % en poids à 3 % en poids de LLDPE recyclé, de préférence 0 % en poids de LLDPE recyclé, par rapport au poids de la couche de cœur.

3. Film selon l'une quelconque des revendications précédentes, dans lequel le HDPE recyclé est un HDPE recyclé mécaniquement.

4. Film selon l'une quelconque des revendications précédentes, dans lequel la couche de cœur comprend en outre du HDPE vierge.

5. Film selon l'une quelconque des revendications précédentes, dans lequel la quantité de HDPE vierge, de HDPE recyclé ou de mélanges de ceux-ci présents dans la première couche de polyéthylène est de 0 % en poids à 10 % en poids de la première couche de polyéthylène, de préférence 0 % en poids de HDPE choisi parmi le HDPE vierge, le HDPE recyclé et leurs mélanges.

6. Film selon l'une quelconque des revendications précédentes, dans lequel la deuxième couche d'étanchéité en polyéthylène comprend du LLDPE, du LDPE, du LLDPE catalysé par un métallocène, ou des combinaisons de ceux-ci.

7. Film selon la revendication 6, dans lequel la deuxième couche d'étanchéité en polyéthylène comprend 50 parties à 100 parties de LLDPE catalysé par un métallocène et/ou de LLDPE et 20 parties à 50 parties de LDPE, en poids de la deuxième couche d'étanchéité en polyéthylène.

8. Film selon l'une quelconque des revendications précédentes, dans lequel la quantité de HDPE vierge, de HDPE recyclé ou de mélanges de ceux-ci présents dans la deuxième couche d'étanchéité en polyéthylène est de 0 % en poids à 10 % en poids, de préférence 0 % en poids de HDPE choisi parmi le HDPE vierge, le HDPE recyclé et leurs mélanges.

9. Procédé pour préparer le film multicouche flexible de l'une quelconque des revendications précédentes, dans lequel le film est produit par un procédé de soufflage.

10. Procédé selon la revendication 9, dans lequel le procédé de soufflage comprend l'étape de maintien de la température de l'extrudeuse et de la filière pour la couche de cœur dans la plage allant de 180°C à 230°C.

11. Structure stratifiée comprenant le film multicouche flexible de l'une quelconque des revendications précédentes, et une couche stratifiée choisie parmi un film de polyéthylène, un film de polypropylène et des mélanges de ceux-ci.

12. Emballage formé à partir d'une structure stratifiée de la revendication 11 ou d'un film multicouche de l'une quelconque des revendications 1 à 8 ou d'un film multicouche pouvant être obtenu selon la revendication 9 ou 10.

13. Emballage selon la revendication 12, lequel emballage est sous la forme d'une poche, d'un sachet, d'un sac, d'une poche à soufflet, d'une poche autoportante ou d'un tube.

14. Article emballé dans lequel une composition pour consommateur, choisie parmi une composition d'entretien ménager et une composition de soin personnel, est enfermée à l'intérieur d'un emballage selon la revendication 12 ou 13.
